Europäisches Patentamt

European Patent Office

Office européen des brevets

(19)

(11) Publication number: 0 104 872

A2

# EUROPEAN PATENT APPLICATION

(21) Application number: 83305533.8

(22) Date of filing: 20.09.83

(51) Int. Cl.³: F 24 F 11/00

(30) Priority: 22.09.82 US 421191

(43) Date of publication of application:
04.04.84 Bulletin 84/14

(84) Designated Contracting States:
AT BE CH DE FR GB IT LI LU NL SE

(71) Applicant: DUNHAM-BUSH INC.
175 South Street
West Hartford Connecticut 06110(US)

(72) Inventor: Somerset, James P.
30 Terrace Road
West Hartford Connecticut(US)

(72) Inventor: Shaw, David N.
33 Silversmith Road
Unionville Connecticut(US)

(74) Representative: Jennings, Guy Kenneth et al,
GILL JENNINGS & EVERY 53-64 Chancery Lane
London WC2A 1HN(GB)

(54) Air conditioning and compressor control system.

(57) A control system progressively increases the capacity levels of a compressor capable of operation at multiple capacity levels in accordance with the sensed return air temperature (RAA, RAB, RAC) within limits permitted by the sensed evaporator coil temperature. Excessive relative humidity (RHS) will turn on the system if it is not already running and raise the capacity level by one step if it is already running. Logic circuitry controls or terminates compressor operation in response to an air conditioning mode signal (A/C MODE), compressor suction pressure (LDS, PDPS), discharge pressure (HPS1, HPS2), discharge temperature (DTS1, DTS2), evaporator coil temperature (CTD, CTE, CTF), return air temperature (RAA, RAB, RAC) ambient temperature and relative humidity (RHS). In addition, the control system is capable of controlling a return air heating relay (50) as a function of return air temperature either when in a heating mode of operation or when necessary to re-heat chilled and de-humidified return air when in an air conditioning mode operation.

FIG. 5

GJE/10/2146/02

Dunham-Bush Inc.

1

## Air conditioning and compressor control system

This invention is related to gas compressors e.g. gas compressors driven by independently variable speed prime movers and used in air conditioning systems of the type wherein the compressor receives a working gas through an intake and compresses the working gas, which gas is then passed from a compressor discharge through a condensor and then through an evaporator, and wherein air is drawn in from an area and passed over the evaporator to be cooled and then returned to the said area. The invention is more particularly directed to a control system for controlling the operation of such compressors and related air conditioning/heating functions. Still more particularly, the present invention is directed to a system for controlling a variable load compressor of the well-known type operable at a first capacity level in response to a first control signal for providing a first degree of compression to the working gas and at a second capacity level in response to a second control signal for providing a second greater degree of compression to the working gas. An improved compressor of this type is disclosed in U.S. patent no: 4,380,048 and leads to a more efficient and economical variable capacity air conditioning system.

As described in this specification, the compressor capacity is adjusted by the operation of a pair of solenoid valves, the compressor operating at minimum, e.g. 33 percent, load when neither of the solenoid valves is energized, intermediate load, e.g. 66 percent load, when one of the solenoid valves is energized and maximum, or 100 percent load when the other solenoid valve is energized. In order for the air conditioning system to operate efficiently, there remains a need for a control system for determining the conditions under which the solenoid valves should be actuated. Such a control system should preferably not only control the load conditions of the compressor but should also comprise an integrated system for controlling various other air conditioning/heating system functions. The control system should not only be as simple as possible to minimize manufacturing costs and maximize reliability, but should also be sufficiently sophisticated to maintain the system operation at its maximum efficiency.

According to the present invention, a control system for a compressor of the type just described, for use in an air conditioning system of the type referred to earlier, comprises temperature sensing means for sensing the temperature of the returned air, the temperature sensing means providing a first temperature signal when the return air temperature is above a first temperature level to cause the compressor to operate at the first capacity level and a second temperature signal when the return air temperature is above a second temperature level to cause the compressor to operate at the second capacity level, and control means for providing the first and second control signals in response to the first and second temperature signals.

Expressed in more general terms, such a control system includes a plurality of temperature sensors for sensing temperatures at various points within the air conditioning system, a plurality of switches for detecting both ambient and system internal conditions, and logic circuitry for logically combining outputs from the sensors and switches and providing in response thereto the appropriate output signals for system control. Although the temperatures may be sensed in an analog manner, the analog temperature signals in the preferred embodiment are subjected to a plurality of threshold comparisons to provide the proper signal format for logic operations. In the preferred embodiment, the logic circuitry will provide a STEP 1 output permitting low load operation in response to a first set of conditions, will provide a STEP 2 signal permitting intermediate load operation in response to a second set of conditions inclusive of the first set of conditions and will provide a STEP 3 signal permitting full load operation in response to a third set of conditions inclusive of the second set of conditions.

In addition to these various load controlling signals, the control system will indicate to the system operator whether a malfunction has occurred. The system will also indicate to the operator when the conditions for operation have not been satisfied but the air conditioning system has been turned on. Provision is made for control of liquid injection to cool the compressor, inhibition of compressor loading beyond the first capacity level until proper suction pressure is achieved during start-up or if discharge pressure exceeds a high set point, reheating of return air after it has been dehumidified by cooling and heating of return air when a heating mode of operation is selected.

The invention will be more clearly understood from the following description in conjunction with the accompanying drawings, in which:-

Figure 1 is a brief block diagram of the overall control system;

Figure 2 is a timing diagram illustrating the operation of a coil temperature signal;

Figure 3 is a timing diagram illustrating the operation of a discharge temperature signal;

Figure 4 is a brief schematic diagram of low and high pressure switches employed in Figure 1; and

Figure 5 is a diagram of a preferred embodiment of logic circuitry of Figure 1.

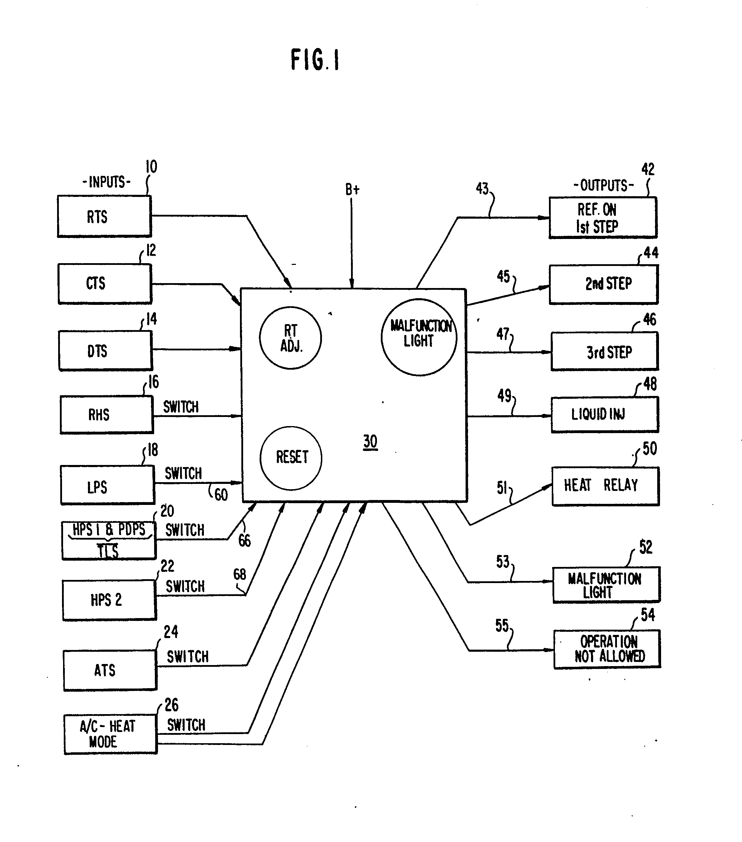

As illustrated in Figure 1, the system includes a plurality of input devices 10 - 26 for providing signals indicative of return air, ambient and system parameters, a control block 30 for receiving input signals from the various devices 10 - 26 and a plurality of output devices 42 - 54 for receiving control signals from the control block 30 in response to particular combinations of input signals.

The individual components illustrated in Figure 1 may be described as follows.

The return air temperature sensor (RTS) 10 will comprise a temperature sensor and an operational amplifier-based circuit for producing a voltage linearly proportional to the return air temperature over the range of approximately $18^{0}$C to $27^{0}$C. In the context of an air conditioning system for, e.g. a street bus, the return air is the air within the bus as opposed to the ambient air outside the bus. The temperature sensor portion of the RTS 10 may preferably comprise a thermistor of a type well known in the art and available, e.g. from Keystone Carbon, and the maximum error of the RTS output should be approximately $\pm 0.3^{0}$C. The thermistor should be linearized, i.e. it should provide a signal linearly proportional to temperature change over the temperature range of interest. The return air temperature proportional voltage will be applied to three non-

5

inverting comparator circuits included either within the RTS 10 or within the control block 30. The comparator circuits are each provided with a hysteresis characteristic in a well known manner. From these three non-inverting comparator circuits will thus be provided three binary-type return air temperature signals each representing a different temperature level. By way of example, the three binary-type return air temperature signals, designated RAA, RAB and RAC respectively, may have the nominal set points and hysteresis characteristics set forth below in TABLE 1:

TABLE 1

| Signal label | Nominal "On" Set-point | Adjustment Range | Hysteresis |
|---|---|---|---|
| RAA | 22°C | ± 0.5°C | 2°C |
| RAB | 23°C | ± 0.5°C | 0.5°C |
| RAC | 24°C | ± 0.5°C | 0.5°C |

In addition to the adjustment range for each set point as shown in TABLE 1, an additional control will be included to permit all three signals as a group to be adjusted ±3°C from the nominal "on" set points.

The evaporator coil temperature sensor (CTS) 12 preferably comprises an affixed sensor at a desired location in the evaporator coil to monitor the coil temperature, and an operational amplifier-based circuit to produce a voltage linearly proportional to the coil temperature over the range of approximately - 1°C to 2°C. The sensor portion of the CTS12 is preferably a linearized thermistor and the maximum amplifier circuit should be ± 0.3°C as in the RTS 10.

6

As is the case with the RTS 10, the coil temperature proportional voltage in the CTS 12 will be applied to a quantizing circuit made up of three non-inverting comparator circuits with hysteresis to produce three binary-type coil temperature signals each representing a different temperature threshold. The nominal set points for the three binary signals may be as defined in the following TABLE 2:

TABLE 2

| Signal label | Nominal "On" Set-point | Adjustment Range | Hysteresis |
|---|---|---|---|
| CTD | 0°C | ± 2°C | 0.5°C |
| CTE | 1°C | ± 2°C | 0.5°C |
| CTF | 2°C | ± 2°C | 0.5°C |

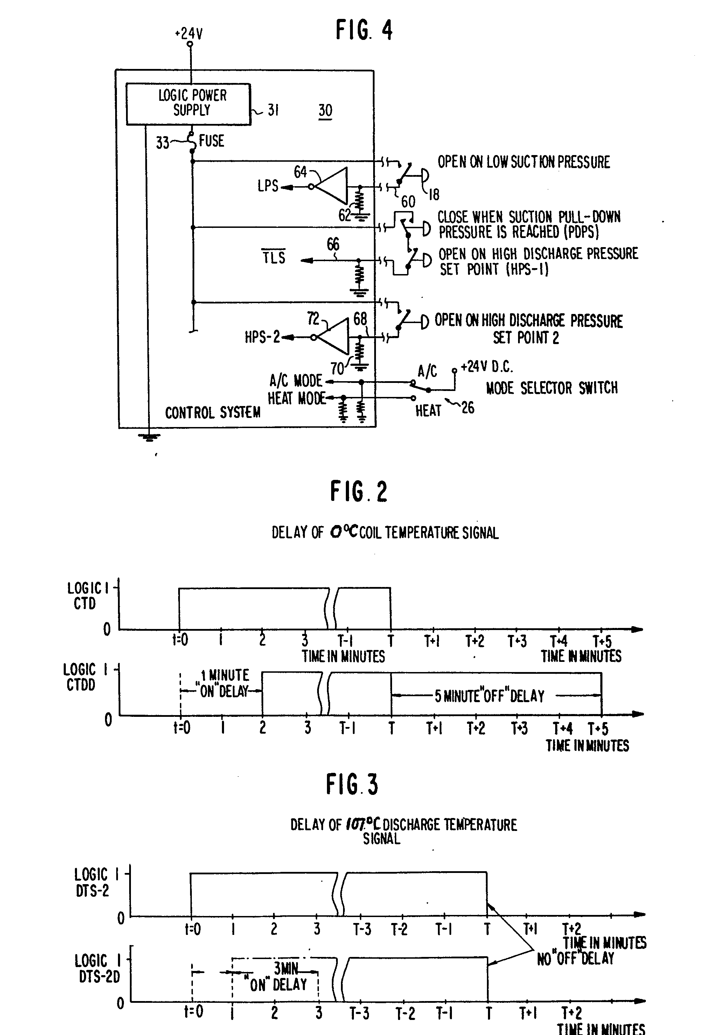

Also included in the CTS 12, or alternatively in the control block 30, is suitable delay circuitry of the type well known in the art for delaying the CTD on-going and off-going transitions. In the preferred embodiment, the on-going transition may be delayed by approximately one minute while the off-going transition is delayed by approximately five minutes, as illustrated in Figure 2. In Figure 2, the delayed version of the CTD signal is labelled CTDD. The delay is provided in the on-going transition on the assumption that the evaporator coil may be permitted to operate at a temperature of at or slightly below 0°C for a short period of time before it will freeze up. The delay in the off-going transition is provided to ensure that the evaporator coil temperature will be permitted to rise adequately above 0°C. The on-going and off-going delays will together prevent the compressor

7

from cycling on and off too quickly due to rapid fluctuations in the evaporator coil temperature.

The discharge line temperature sensor (DTS) 14 preferably comprises a temperature sensor attached to the compressor discharge line at a location upstream of the system condenser. The basis temperature signal from this sensor will then be amplified to produce a signal proportional to the discharge temperature over the range of approximately 79°C to 115°C. The maximum error of this temperature proportional voltage within the DTS 14 should be approximately ± 3°C. Either internally of the DTS 14 or within the control block 30 itself, the discharge line temperature proportional voltage is applied to two non-inverting comparator circuits with hysteresis to produce two binary-type discharge line signals each representing a different temperature threshold. The nominal set points in the preferred embodiment may be as shown below in TABLE 3:

TABLE 3

| Signal Label | Nominal "On" Set-point | Adjustment Range | Hysteresis | Function |
|---|---|---|---|---|
| DTS1 | 90°C | 8°C | 5°C | Control |
| DTS2 | 115°C | 13°C | 11°C | Safety |

The two discharge temperature signals, labelled as DTS-1 and DTS-2 are designated as being relevant to control and safety functions, respectively, and this distinction will be discussed in more detail below. In addition to the data shown in TABLE 3, it is preferable to delay only the DTS-2 on-going transition while providing no delay in the off-going transition. In the preferred embodiment, the on-going transition is delayed for three minutes, and the delayed DTS-2 signal is labelled in figure 3 as DTS-2D. The on-going delay is provided under the assumption that the compressor can operate without harm for a short period of time at a discharge temperature in excess of 115°C.

The remaining input devices 16-26 provide only a single binary-type output to be received as an input by the control block 30, as distinguished from the signals provided by the devices 10-14 which are either analog or multiple-bit depending upon the location of the multiple-level comparator circuits. The Relative Humidity Switch (RHS) comprises a switch which will close when the relative humidity in the return air stream exceeds a maximum predetermined comfort level. The RHS set point may be, for example, 65% ±5%.

The Low suction Pressure Switch (LPS) 18 will monitor the compressor suction pressure and provide an output indicating a fault, or low pressure, condition. Although a number of alternative connection arrangements could be used, one example would be a two-wire connection from the control block 30 to the LPS 18 with one wire carrying logic power supply voltage to the switch 18. Under normal operating conditions, the power supply to the switch 18 would pass through a normally closed switch and thence back to the control block where it would be inverted to indicate a logic "zero" signifying a non-fault condition. If a fault occurs to open the switch 18, or if the connection wire between the switch 18 and control panel 30 is broken, the voltage on the return wire to the control panel would be lost and, after inversion, a logic "one" would indicate a fault condition. The second wire carrying the logic supply voltage back to the control panel 30 is connected through an appropriate resistor to ground and also to the input of a logic inverter. This type of connection is briefly illustrated in the schematic diagram of figure 4 wherein the return wire 60 from the LPS 18 is connected through a resistor 62 to ground and also to the input of the inverter 64. If a malfunction occurs which does not cause the LPS 18 to open, for example if the insulation on a wire is chafed through to form a path to ground, a fuse or circuit breaker 33 connected in series with the logic power supply will open to remove power from the LPS 18 and shut down the system.

The lower set-point high discharge pressure switch (HPS-1) in series with the pull down pressure switch (PDPS) together form the "not torque limit" signal ($\overline{TLS}$) 20 and functions in a manner similar to LPS 18 in that it is coupled to the control panel via two wires one of which carries logic power supply voltage to the series combination and the other of which carries the power supply voltage back to the control panel 66. At the time of compressor start-up, the pull down pressure switch, PDPS, which is monitoring the suction side of the compressor, serves to limit the compressor capacity to the first step until the suction pressure is pulled down to the switch set point. During routine compressor operation when the discharge pressure reaches the set point of HPS-1, the switch opens and interrupts the logic voltage back to the control panel thereby signifying a high discharge pressure condition and allowing the compressor to operate only in the first step capacity.

The higher set point High discharge Pressure Switch (HPS-2) 22 is a second high discharge pressure switch similar to HPS-1 but with a set point above that of HPS-1. In the preferred embodiment, as shown in figure 4, the HPS-2 return line 68 is coupled through a resistor 70 to ground and also to the input of an inverting amplifier 72, so that a high level output from inverter 72 will indicate a fault condition.

Ambient Temperature Switch (ATS) 24 may include any one of variety of well known temperature sensors to indicate when the ambient temperature is above a preset value, under which circumstances the ATS 24 output signal will be a logic 1. The switch in the preferred embodiment may close and open at approximately $9^0$C and $7^0$C respectively, to provide a $3^0$C hysteresis characteristic.

The last of the illustrated input devices is an A/C-heat mode selector switch 26. This switch is preferably located in the vicinity of the operator's instrument panel and permits the system operator to manually turn the system on and off.

Turning now to the output devices, the "Refrigeration On-1st Step" unit 42 may be a relay which controls the energization of any system components necessary for compressor operation. When a signal on line 43 occurs as an indication from the control block 30 that refrigeration is allowed and compressor operation is desired, a control relay device 42 will be energized which in turn will accomplish energization of the various functions required for system operation, e.g. fan motors, compressor clutch, damper closure, etc.

The 2nd Step device 44 and third step device 46 would be relays for enabling the intermediate load and full load compressor operations, respectively. The relays are necessary since the output signals from the control logic circuitry will usually not be capable of providing sufficient current to activate the necessary components. These devices operated by relays 44 and 46 in figure 1 may, for instance, correspond to solenoid valves 106 and 108, respectively, in the system disclosed in copending application 242,100. Thus, a signal on line 43 will result in low load system operation, signals on both of lines 43 and 45 will result in intermediate load operation, and signals on both of lines 43 and 47 will result in full load operation.

Liquid Injection device 48 is provided for oil cooling for the screw compressor. When required for oil cooling purposes, a solenoid valve included within the injection device 48 will be energized to either inject liquid into the compressor or by-pass oil through an air cooled surface.

The Heat Relay 50 is provided to control hot water flow through heating coils in the return air flow path when return air temperature is too low. Heating of return air may be necessary during normal heating mode operation when the ambient air temperature is low or during air conditioning mode operation after air has been dehumidified by cooling. When reheating is called for after dehumidification, the effective amount of heat added is reduced from that amount provided during normal heat mode operation by pulsing the heat relay on and off thereby causing only a fraction of the normal full-time heat to be applied.

The malfunction light 52 may preferably be located on the operator's console or in the vicinity thereof to indicate to the operator that the air conditioning system is inoperative and that a manual reset is required before the system can again be rendered operational. This manual reset may be performed internally of the control block 30 so that it will only be accessible to a qualified serviceman or technician.

The final output device illustrated in figure 1 is the Operation Not Allowed device which preferably comprises a light at the operator's console to be energized to indicate to the operator that the air conditioning system will not be allowed to function due to low ambient temperature. This light should only be energized when a malfunction is not present and system operation has been requested as detected by the A/C mode signal from switch 26.

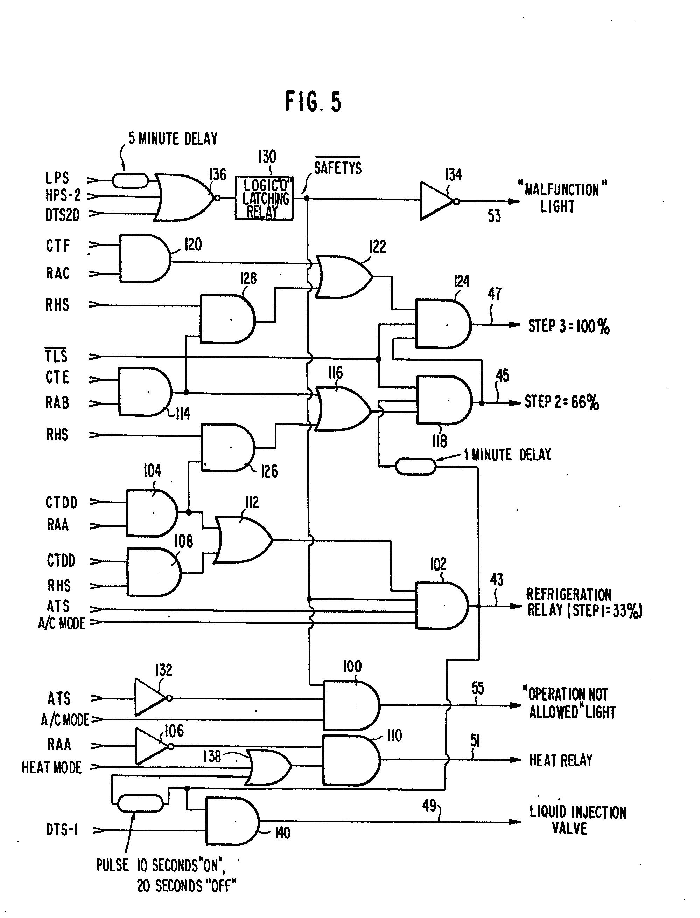

The operation of the system will now be described with reference to the logic diagram of figure 5 which illustrates control logic circuitry included within the control block 30 in figure 1. When the operator desires to utilize the air conditioning system, the A/C-heat mode switch is placed in the A/C mode position which raises the A/C mode signal at gates 100 and 102. Assuming that the ambient temperature is sufficiently high, the ATS signal at the input of AND gate 102 will be high, while the inverted ATS signal at the input of gate 100 will disable the gate 100. Assuming that the suction and discharge pressures and the discharge temperature of the compressor are proper, and assuming that the ambient temperature and evaporator coil temperature are sufficiently high and that either the return air temperature or relative humidity are also high, all inputs to gate 102 will be at a high level and gate 102 will provide at its output on line 43 a signal which will be used to activate a refrigeration relay to turn on the compressor. If we assume that the return air temperature is between the nominal "on" set points for the return air temperature signals RAA and RAB from TABLE 1, the compressor will operate in its normal fashion to decrease the return air temperature.

When the return air temperature eventually falls below the "off" temperature of signal RAA, e.g.20⁰C with a 2⁰C hysteresis, the signal RAA will fall to a low level at the inputs to gate 104 and inverter 106.

If the relative humidity is low, the RHS signal at the input to gate 108 will be low so that the outputs of gates 104, 108, 112 and 102 will all be low thus turning off the compressor. The compressor will automatically turn on again when the return air temperature rises above the "on" set point of RAA to thereby enable gates 104, 112 and 102.

If the return air temperature remains low, but the relative humidity exceeds its predetermined comfortable level, the signal RHS will go to a high level to enable gates 108, 112 and 102, thereby turning on the compressor with the signal on line 43. The combination of low return air temperature through gate 106 and a compressor operation signal pulsed for 10 seconds "on" and 20 seconds "off" through gate 138 will cause the output of gate 110 to pulse the heat relay signal thus providing surges of hot water to a heating coil in the return air path. This will permit dehumidification of the return air without reducing the temperature thereof. When the relative humidity drops to a comfortable level, the RHS signal will become low to thereby turn off both the compressor and the heat relay.

If during the compressor operation the return air temperature continues to rise because the compressor is not operating at a sufficient capacity, or if the return air temperature is already at a sufficiently high level when the A/C mode signal is provided, return air signal RAB may be activated. Under this condition, the gates 104, 112 and 102 will continue to provide high output levels. If the evaporator coil temperature is higher than the intermediate temperature set point, the CTE signal will be high and will act together with the high level RAB signal to activate gate 114 which will then provide a signal through OR gate 116 to an input of AND gate 118.

0104872

14

Assuming that the compressor discharge pressure does not exceed the set point of HPS-1 and that the suction is pulled down below the set point of PDPS, TLS will be at a high level and assuming that the compressor has been operating (refrigeration relay signal has been true) for at least one minute, all three inputs to AND gate 118 will be high and a signal on line 45 will cause the compressor to operate at its intermediate load capacity.

If the temperature continues to rise so that it exceeds the "on" set point of return air temperature signal RAC and the evaporator coil temperature is above set point CTF, gate 120 will be enabled to pass a signal through gate 122 to an input of AND gate 124. The compressor will then be energized to operate at its full load capacity.

It should be noted that a condition of excessive humidity will cause the compressor to increase its capacity by one step. For example, if the return air temperature is sufficiently low such that RAA is at a low level but the evaporator coil temperature is sufficiently high such that CTDD is at a high level and the relative humidity is above the humidity sensor set point such that RHS is high, then a logic "1" will be passed through AND gate 108 and OR gate 112 and will be applied to AND gate 102. Therefore, the compressor would be energized if the other inputs to AND gate 102 were at a logic 1 level. Also, note that the heat relay would be pulsed through OR gate 138 and AND gate 110 as long as the return air temperature remained below the RAA set point. On the other hand, if the temperature is above the set point of RAA such that the compressor must be operated at its low load condition in order to reduce the temperature, an excessive humidity in combination with this excessive temperature will call for a higher compressor capacity, and consequently a signal will be supplied through gates 126 and 116 to enable the AND gate 118 for intermediate load operation one minute after compressor operation was initiated by activation of the refrigeration relay signal. Further, if the temperature signal RAB is already calling for intermediate load operation, an excessive humidity signal will be provided through gates 128 and 122 to enable gate 124 for full load operation. If either the temperature or humidity fall, the compressor will be reduced to an intermediate or low load condition as appropriate.

The system capacity can be automatically tailored to the load requirements in the manner described above, but care must be taken to ensure that the evaporator coil does not freeze up. Accordingly, the capacity of the compressor can only be increased within the limits permitted by the evaporator coil temperature. For instance, if the evaporator coil temperature falls below the third CTS "off" threshold (e.g. $2^{\circ}$ C in the example given in TABLE 2), the signal CTF will fall to a low level and the full load condition will not be called for by the gate 120 even if the return air temperature exceeds the RAC set point. In such a case, full load operation is only possible if the relative humidity is also high as indicated by the output from gate 128. Similarly, if the intermediate evaporator coil temperature is not met, full load operation will not be permitted under any circumstances and intermediate load operation will only be permitted under circumstances of high relative humidity.

If the evaporator coil temperature drops below the off threshold of the lowest coil temperature signal CTD, the system will be given a 5 minute "grace" period due to the turn-off delay provided in the signal CTDD. If the coil temperature remains excessively low, the compressor will then be turned off due to the simultaneous disabling of both of gates 104 and 108. With the compressor off, the coil temperature will begin to rise until it exceeds the CTD on set point, and an additional 1 minute of grace period will be provided by the delay in the turn-on of CTDD as illustrated in figure 2.

If at any time during the compressor operation the discharge pressure of the compressor exceeds a first predetermined value, the HPS-1 switch will open causing signal $\overline{TLS}$ to fall to a low level. This will reduce the capacity of the compressor to minimum load if it is already operating at either intermediate or full load. If the compressor is already operating at minimum load, no change in the system operation will occur. Also, during the normal compressor start-up sequence, intermediate and full load operation is prevented until the suction pressure is pulled down below the set point of the pull down pressure switch PDPS thus closing the series circuit of PDPS and HPS-1 and making the $\overline{TLS}$ signal true.

If the DTS sensor upstream of the system condenser detects that the working gas discharge temperature of the compressor exceeds a first predetermined value, the signal DTS-1 acting through gate 140 will provide a signal on line 49 whereby either liquid is injected into the compressor or oil is by-passed through an air cooled surface to help cool down the compressor. This liquid injection will be terminated when the signal DTS-1 indicates that it is no longer called for.

The operation described above thus far concerns the various control functions performed whereby the operation of the system is adjusted to meet various demands. However, the system is also provided with safety features for preventing or terminating compressor operation under certain circumstances. Under normal operation, the latching relay 130 provides a logic "1" output which is provided as an input to each of gates 100 and 102. Under these conditions, the system will operate as described above and the "operation not allowed" light will only be energized by the gate 100 if the A/C mode input is active and the ATS signal to the input of inverter 132 falls to a low level to indicate that the ambient temperature is too low to permit compressor operation. If any one of a number of hazardous conditions occur, however, the relay 130 will latch into a logic "0" condition to disable the compressor through gate 102 and to energize the "malfunction" light through inverter 134. The input to the latching relay 130 is provided from NOR gate 136, so that the relay 130 will latch to a low level output condition if any one of the inputs to NOR gate 136 rises to a high level.

The signal DTS-2 turns on at a set point such as indicated in TABLE 3 which is the maximum permissible compressor discharge line temperature. If the temperature reaches this level, the liquid injection will already have been implemented by the signal DTS-1, and it is now necessary to shut down the compressor. As illustrated in figure 3, the turn-on transition of the signal DTS-2 is preferably delayed 3 minutes, after which time it will rise to a high level and result in the system operation being latched into an off condition.

If the upper compressor discharge pressure point has been exceeded, the signal $\overline{TLS}$ will already have reduced the system load to its minimum level so that when the signal HPS-2 goes to a high level a system malfunction will be indicated and the latching relay 130 will disable the compressor through the gate 102.

Finally, if the compressor suction pressure drops below a predetermined level, the compressor is not operating properly and it will be necessary to disable the system. The turn-on transition of the low pressure signal LPS is preferably delayed for 5 minutes. If the suction pressure falls below the LPS switch set point for more than 5 minutes, the LPS signal through latching relay 130 will disable the compressor and indicate a malfunction.

The three above-described safety function limits will be monitored so that if any of these limits is equalled or exceeded, system operation will be terminated and latched out and the malfunction light energized. Restoration of the system operation after a safety shut-down and latch-out will preferably require an operation internally of the control block such that it can only be performed by a serviceman or mechanic rather than by the operator himself.

The return air group adjustment (RT ADJ) shown in figure 1 is for the purpose of permitting the system operator to adjust as a group the three set points for the return air temperature signals RAA, RAB and RAC if desired, this adjustment may be made internal to the control block rather than by the operator. The Reset illustrated in figure 1 may be a manual reset button that will de-energize the malfunction light and reset the latch-out relay 130 when pushed. As indicated above, this switch may also be made internal to the control block 30 for access only by a serviceman or mechanic.

The system described above is capable of low, intermediate and full load operating conditions in addition to the zero percent or declutched position while in the A/C mode of operation or of heating while in the heat mode of operation. The control block 30 will control these three capacity levels and heating function in accordance with a number of sensed conditions with rising return air temperature causing progressively increasing capacity levels and the relative humidity increasing the capacity level when required in the air conditioning mode of operation and falling return air temperature causing heating to be activated in the heating mode of operation. The return air temperature dictates the primary capacity requirement and the evaporator coil temperature sensor will permit the capacity to be increased to match the imposed load only within the limits of the system.

Excessive relative humidity will turn on the system if it is not already running and will raise the capacity level by one step if it is already running. Once the relative humidity sensor is satisfied, the system will be turned off or reduced in capacity in accordance with the RTS output.

Although a single preferred embodiment of the system has been described above, it will be apparent that various changes and modifications could be made without departing from the principle of the invention. For example, alternative techniques could be used for latching out system operation other than by a latching relay 130 which provides its output to inverter 134 and each of gates 102 and 100. Further, it will be apparent that the output signals from the control module 30 in figure 1 may require conditioning in order to provide the required power to the various load devices, such signal conditioning being easily accomplished through the use of adequately rated and protected power transistors. Still further, in an electronic system such as described above, electromagnetic interference (EMI) is a potential hazard and, in the specific case of the input devices, shielded cable may be used when necessary to prevent EMI from entering the control module 30 through the sensor paths.

It should also be noted that the logic and signalling scheme described above could be reversed without departing from the spirit and scope of the invention, and that the "signals" referred to in the

0104872

20

appended claims may refer to analog signals or to logic "1" or logic "0" signals, or combinations thereof.

CLAIMS

1.      A control system for a compressor in an air conditioning system of the type wherein the compressor receives a working gas through an intake and compresses the working gas, which gas is then passed from a compressor discharge through a condensor and then through an evaporator, and wherein air is drawn in from an area and passed over the evaporator to be cooled, and then returned to the said area, the compressor being of a type operable at a first capacity level in response to a first control signal for providing a first degree of compression to the working gas and at a second capacity level in response to a second control signal for providing a second greater degree of compression to the working gas, characterised in that the control system comprises temperature sensing means (10) for sensing the temperature of the returned air, the temperature sensing means providing a first temperature signal (RAA) when the return air temperature is above a first temperature level to cause the compressor to operate at the first capacity level, and a second temperature signal (RAB) when the return air temperature is above a second temperature level to cause the compressor to operate at the second capacity level, and control means(Fig.5) for providing the first (43) and second (45) control signals in response to the first and second temperature signals.

2.       A control system according to claim 1 for a compressor which is capable of operating also at a third capacity level in response to a third control signal characterised in that the temperature sensing means provides a third temperature signal (RAC) when the return air temperature exceeds a third temperature higher than the second temperature and the control means provides the third control signal (47) in response to the third temperature signal, the control means generating the second control signal (45) in response to the second temperature signal (RAB) only when the first control signal (43) is being generated, and the control means generating the third control signal (47) in response to the third temperature signal (RAC) only when the control signal (45) is being generated.

3.       A control system according to claim 1 or claim 2 and further comprising evaporator temperature sensing means (12) for providing an evaporator temperature indication representing the temperature of the evaporator means, the control means inhibiting the generation of at least one of the control signals in response to an excessively low temperature detected by the evaporator temperature sensing means.

4.       A control system according to claim 3 wherein the evaporator temperature indication comprises a first evaporator temperature signal ($\overline{CTD}$ or $\overline{CTDD}$) when the evaporator temperature is below a first evaporator temperature and a second evaporator temperature signal ($\overline{CTE}$) when the evaporator temperature is below a second temperature higher than the first evaporator temperature, the control means being responsive to the first evaporator temperature signal to inhibit the generation of the first control signal, and being responsive to the second evaporator temperature signal ($\overline{\text{CTE}}$) for inhibiting the generation of the second control signal (45).

5.    A control system according to claim 4 wherein the evaporator temperature sensing means includes means for delaying the generation of the first evaporator temperature signal ($\overline{\text{CTDD}}$) for a first period of time after the evaporator temperature falls below the first evaporator temperature and means for delaying the termination of the first evaporator temperature signal ($\overline{\text{CTDD}}$) for a second period of time after the evaporator temperature rises above the first evaporator temperature.

6.    A control system according to any one of the preceding claims further comprising discharge temperature sensing means (14) for sensing the working gas temperature at the compressor discharge, the control means providing a compressor cooling signal (49) to activate compressor cooling means in response to a compressor discharge temperature exceeding a first predetermined discharge temperature level and the control means disabling the compressor in response to a safety signal (DTS2 or DTS2D) from the discharge temperature sensing means indicating a detected discharge temperature exceeding a second predetermined discharge temperature level.

7. A control system according to any one of the preceding claims further comprising discharge pressure sensing means (20, 22) for generating a first discharge pressure signal (TLS) when the pressure of the working gas at the compressor discharge exceeds a first predetermined discharge pressure level and a second discharge pressure safety signal (HDS-2) when the discharge pressure of the working gas exceeds a second predetermined discharge pressure higher than the first discharge pressure, the control means being responsive to the first discharge pressure signal for inhibiting the generation of the second control signal and being responsive to the second discharge pressure safety signal for inhibiting the generation of the first control signal.

8. A control system according to any one of the preceding claims further comprising suction pressure means (18) for providing a suction pressure safety signal (LPS) when the suction pressure of the working gas at the intake to the compressor falls below a predetermined suction pressure level, the control means being responsive to the suction pressure safety signal (LPS) for inhibiting the generation of the first control signal.

9. A control system according to claim 8, wherein the suction pressure means includes means for delaying the generation of the suction pressure safety signal (LPS) for a predetermined period of time after the suction pressure falls below the

25

predetermined suction pressure level.

10. A control system according to any one of the preceding claims, further comprising ambient temperature sensing means (24) for providing an ambient temperature signal ($\overline{ATS}$) in response to a detected air temperature exterior to the said area below a predetermined ambient temperature value, the control means being responsive to the ambient temperature signal ($\overline{ATS}$) for inhibiting the generation of the first control signal.

11. A control system according to any one of the preceding claims and further comprising humidity sensing means (16) for providing a humidity signal (RHS) when the relative humidity of air in the said area is above a predetermined humidity level, the control means being responsive to the humidity signal (RHS) for generating the first control signal (43) in the absence of the first temperature signal (RAA) and the control means being responsive to the first temperature signal (RAA) and the humidity signal (RHS) for generating the second control signal (45) in the absence of the second temperature signal (RAB).

12. A control system according to any one of claims 1 to 10 and further comprising humidity sensing means (16) for providing a humidity signal (RHS) when the relative humidity of air in the said area falls below a predetermined humidity level, the control system being responsive to the humidity signal (RHS) in the absence of the first temperature signal (RAA) for generating a heat signal (51)
for re-heating the returned air.

13.      A control system according to claim 12,
further comprising mode selection means (26) for
alternatively generating either an air conditioning
mode signal (A/C MODE) or a heat mode signal
(HEAT MODE), the control system being responsive
to the heat mode signal and the absence of the
air conditioning mode signal for inhibiting the
generation of the first control signal (43) and
for generating the heat signal (51) regardless of
the presence or absence of the humidity signal (RHS).

14.      A control system according to any one
of claims 6, 7, 8 or 9, wherein the control means
includes latching means (130) for latching to a
first latching signal output ("0") in response to
a safety signal and thereafter maintaining the
latching signal output even after the safety signal
is terminated, the latching signal output inhibiting
the generation of the first control signal (43).

15.      A control system according to claim 2
characterised by a suction pressure sensing means
(PDPS) for sensing a suction pressure of the
compressor and for providing a pull-down pressure
signal (TLS) when the suction pressure is above
a pull-down pressure set point, the pull-down
pressure signal preventing the generation of the
second (45) or third (47) control signal until
the suction pressure falls below the pull-down
pressure set point.

## FIG.1

**-INPUTS-**

- RTS (10)
- CTS (12)
- DTS (14)
- RHS (16) — SWITCH
- LPS (18) — SWITCH
- HPS 1 & PDPS / TLS (20) — SWITCH
- HPS 2 (22) — SWITCH
- ATS (24) — SWITCH
- A/C - HEAT MODE (26) — SWITCH

B+

30

- RT ADJ.
- MALFUNCTION LIGHT
- RESET

(60) (66) (68)

**-OUTPUTS-**

- REF. ON 1st STEP (42) — 43
- 2nd STEP (44) — 45
- 3rd STEP (46) — 47
- LIQUID INJ (48) — 49
- HEAT RELAY (50) — 51
- MALFUNCTION LIGHT (52) — 53
- OPERATION NOT ALLOWED (54) — 55

## FIG. 4

+24V

LOGIC POWER SUPPLY — 31    30

33 — FUSE

LPS    64    62

OPEN ON LOW SUCTION PRESSURE

60    18

CLOSE WHEN SUCTION PULL-DOWN PRESSURE IS REACHED (PDPS)

$\overline{TLS}$    66

OPEN ON HIGH DISCHARGE PRESSURE SET POINT (HPS-1)

HPS-2    72    68    70

OPEN ON HIGH DISCHARGE PRESSURE SET POINT 2

A/C MODE    A/C    +24V D.C.

HEAT MODE    HEAT — 26

MODE SELECTOR SWITCH

CONTROL SYSTEM

## FIG. 2

DELAY OF 0°C COIL TEMPERATURE SIGNAL

LOGIC 1 CTD    0

t=0  1  2  3  T-1  T  T+1  T+2  T+3  T+4  T+5

TIME IN MINUTES    TIME IN MINUTES

LOGIC 1 CTDD    0

1 MINUTE "ON" DELAY

5 MINUTE "OFF" DELAY

t=0  1  2  3  T-1  T  T+1  T+2  T+3  T+4  T+5

TIME IN MINUTES

## FIG. 3

DELAY OF 107.°C DISCHARGE TEMPERATURE SIGNAL

LOGIC 1 DTS-2    0

t=0  1  2  3  T-3  T-2  T-1  T  T+1  T+2

TIME IN MINUTES    NO "OFF" DELAY

LOGIC 1 DTS-2D    0

3 MIN "ON" DELAY

t=0  1  2  3  T-3  T-2  T-1  T  T+1  T+2

TIME IN MINUTES

## FIG. 5

5 MINUTE DELAY

LPS, HPS-2, DTS2D → 136 → 130 LOGIC "0" LATCHING RELAY → $\overline{SAFETYS}$ → 134 → "MALFUNCTION" LIGHT  53

CTF, RAC → 120
RHS → 128
122 → 124 → 47 STEP 3 = 100%

$\overline{TLS}$
CTE, RAB → 114
116 → 45 STEP 2 = 66%  118
RHS → 126

1 MINUTE DELAY

CTDD, RAA → 104
CTDD, RHS → 108
112
ATS, A/C MODE → 102 → 43 REFRIGERATION RELAY (STEP 1 = 33%)

ATS → 132
A/C MODE
100 → 55 "OPERATION NOT ALLOWED" LIGHT

RAA → 106
HEAT MODE → 138
110 → 51 HEAT RELAY

DTS-1 → 140 → 49 LIQUID INJECTION VALVE

PULSE 10 SECONDS "ON", 20 SECONDS "OFF"